# EUROPEAN PATENT APPLICATION

(11) **EP 2 317 697 A1**
(43) Date of publication of application: **04.05.2011**
(21) Application number: 10251726.5
(22) Date of filing: 01.10.2010
(51) Int. Cl.: H04L 12/26

(54) **Method and apparatus for the efficient indexing and storage of network traffic**

(30) Priority: 29.10.2009 US 608817
(71) Applicant: Fluke Corporation, Everett, WA 98203 (US)
(72) Inventor: Monk, John, Larkspur, CO 80118 (US); Vogt, Robert, Colorado Springs, CO 80920 (US); Prescott, Dan, Elbert, Colorado 80106 (US); Kosbab, Bruce, Colorado Springs, CO 80920 (US)
(74) Representative: Lock, Howard John

(57) **Abstract**

A network analyzer reads network packets and extracts characterizing attributes, grouping patents observed in a given amount of time on common attribute values. Grouped attributes are meta data, written to a database, while packets are written to files.

## Description

This invention relates to networking, and more particularly to a system, method and apparatus to efficiently index and store network traffic.

In network analysis of complex networks, large amounts of data will be seen by a network analyzer. Heretofore, the approach in network monitory and analysis has been to save all traffic that a monitoring device sees, and later sift through the stored data for analysis and retrieval purposes. Such methods can require substantial time and processing in order to locate and retrieve particular data of interest.

In accordance with one aspect of this invention, there is provided a system for indexing and storage of network traffic, comprising:
a network monitoring device for monitoring network traffic;
said network monitoring device implementing:
   packet characterizing attribute extraction;
   grouping of packets in a time period based on common attribute values;
   storing grouped attributes in a database; and
   storing the physical packets.

In accordance with another aspect of this invention, there is provided a network test instrument for network traffic analysis, comprising:
a network monitoring device for monitoring network traffic;
said network monitoring device including a processor implementing:
   packet characterizing attribute extraction;
   grouping of packets in a time period based on common attribute values; and
   storing grouped attributes in a database; and
   storing the physical packets.

In accordance with another aspect of this invention, there is provided a method of operating a network test instrument for network traffic analysis, comprising:
monitoring device for monitoring network traffic;
performing packet characterizing attribute extraction on the monitored network traffic;
grouping of packets in a time period based on common extracted characterized attribute values; and
storing grouped attributes in a database; and
storing the physical packets.

In accordance with another aspect of the invention, a network monitoring system, device and method, network data is analyzed and accounted for in a packet meta data analogue that is annotated with information that describes the particular packet. The meta data may be stored in a relational database so as to provide efficient lookup based on the descriptive characteristics. The meta data may be split out from the physical data for efficient storage.

It is an advantage of the preferred embodiment of the present invention that it provides an improved network monitor system for efficient indexing and storage of network traffic.

It is a further advantage of the preferred embodiment of the present invention that it provides an improved network monitor system that determines meta data and stores meta data in a database, as well as storing the physical data.

It is yet another advantage of the preferred embodiment of the present invention that it provides an improved network monitor and system to allow efficient indexing and storage of network traffic through use of packet meta data.

The subject matter of the present invention is particularly pointed out and distinctly claimed in the concluding portion of this specification. However, both the organization and method of operation, together with further advantages and objects thereof, may best be understood by reference to the following description taken in connection with accompanying drawings wherein like reference characters refer to like elements.
FIG. 1 is a block diagram of a network with monitoring system;
FIG. 2 is a block diagram of a monitor device for efficient indexing and storage of network traffic; and
FIG. 3 is a diagram of operational steps of the system

The system according to a preferred embodiment of the present invention comprises a network monitoring system, apparatus and method, where network data is analyzed and characterizing attributes of the packets are extracted. In a given period of time, packets are grouped on common attribute values and grouped attributes are written to a database, while the physical packets are written to files.

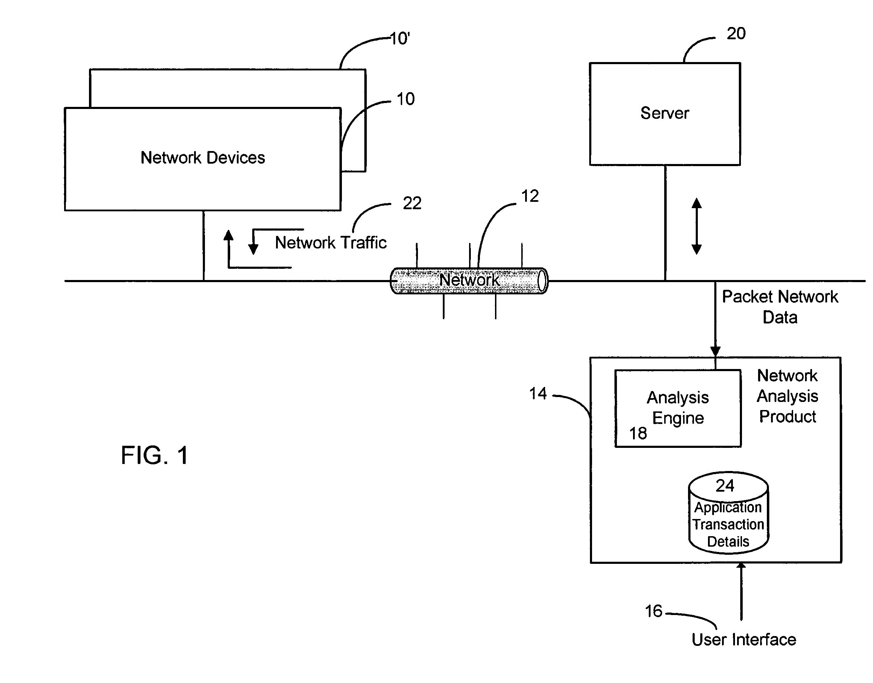

Referring to FIG. 1, a block diagram of a network with an apparatus in accordance with the disclosure herein, a network may comprise plural network devices 10, 10', etc., which communicate over a network 12 by sending and receiving network traffic 22. The traffic may be sent in packet form, with varying protocols and formatting thereof, representing data from a variety of applications and users.

A network analysis product 14 is also connected to the network, and may include a user interface 16 that enables a user to interact with the network analysis product to operate the analysis product and obtain data therefrom, whether at the location of installation or remotely from the physical location of the analysis product network attachment.

The network analysis product comprises hardware and software, CPU, memory, interfaces and the like to operate to connect to and monitor traffic on the network, as well as performing various testing and measurement operations, transmitting and receiving data and the like. When remote, the network analysis product typically is operated by running on a computer or workstation interfaced with the network.

The analysis product comprises an analysis engine 18 which receives the packet network data and interfaces with application transaction details data store 24.

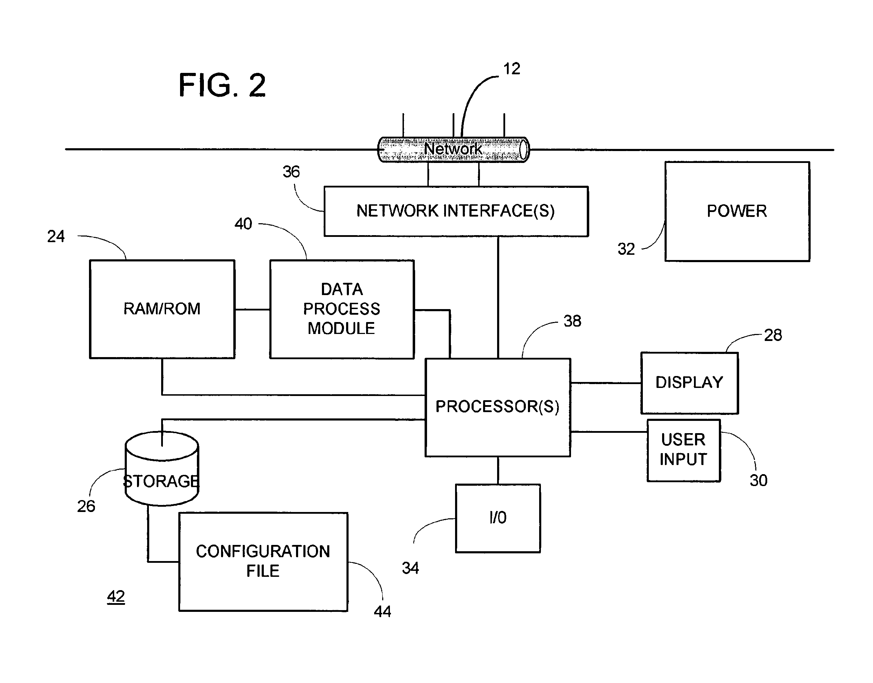

FIG. 2 is a block diagram of a test instrument/analyzer 42 via which the invention can be implemented, wherein the instrument may include network interfaces 36 which attach the device to a network 12 via multiple ports, one or more processors 38 for operating the instrument, memory such as RAM/ROM 24 or persistent storage 26, display 28, user input devices 30 (such as, for example, keyboard, mouse or other pointing devices, touch screen, etc.), power supply 32 which may include battery or AC power supplies, other interface 34 which attaches the device to a network or other external devices (storage, other computer, etc.). Data processing module 40 provides processing of observed network data to provide mixed-mode analysis of network traffic.

In operation, the network test instrument is attached to the network, and observes transmissions on the network to collect information. Under operation of the processor(s) 38, as network traffic is observed, packets are analyzed and determinations are made of components of the packets that characterize the packets, packets having common attributes are grouped and the grouped attributes are stored in a database.

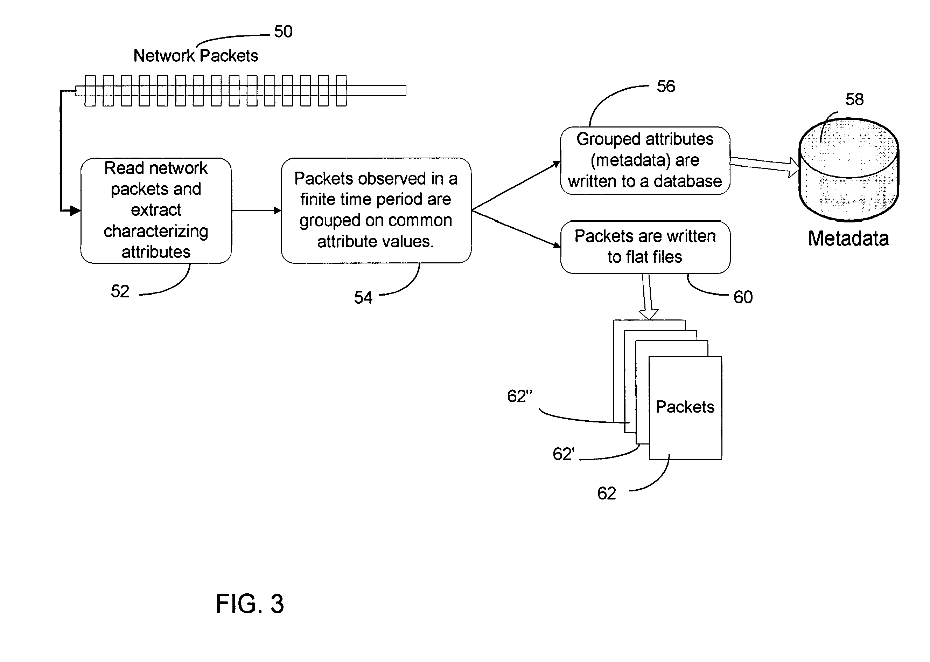

With reference to FIG. 3, a diagram of operation of the system, network packets 50 are received by the device and are read and characterizing attributes are extracted (block 52). Examples of characterizing attributes include, but are not limited to:
- identification of the application that the packet is associated with;
- identification of the flow that the packet is associated with (a flow is characterized as from the beginning to end of an established connection);
- identification of the transaction that the packet is associated with;
- packet start time;
- end time;
- creation time;
- time seen
- uniform resource indicator id;
- port information;
- protocol information;
- client network address information;
- server network address information;
- server id;
- site id.

Packets observed in a finite time period are grouped together on common attribute values (block 54) and grouped attributes, which are referred to as meta data, are written in block 56 to a meta data database 58. In block 60, the physical packets themselves are written to flat files 62, 62', etc.

The meta data for a packet is additionally annotated with information regarding where the packet is physically stored in files 62.

Accordingly, packet meta data is stored in a relational database and can be queried based on desired combinations of characteristics. From the packet meta data, the physical packets can be read from physical storage.

The system, method and apparatus may suitably be implemented within a network test instrument.

While a preferred embodiment of the present invention has been shown and described, it will be apparent to those skilled in the art that many changes and modifications may be made without departing from the invention in its broader aspects. The appended claims are therefore intended to cover all such changes and modifications as fall within the true spirit and scope of the invention.

## Claims

1. A system for indexing and storage of network traffic, comprising:
a network monitoring device for monitoring network traffic;
said network monitoring device implementing:
packet characterizing attribute extraction;
grouping of packets in a time period based on common attribute values;
storing grouped attributes in a database; and
storing the physical packets.

2. The system for indexing and storage of network traffic according to claim 1, wherein attribute values are selected from among the following:
identification of the application that the packet is associated with, identification of the flow that the packet is associated with, identification of the transaction that the packet is associated with, packet start time, end time, creation time, time seen, uniform resource indicator id, port information, protocol information, client network address information, server network address information, server id and site id.

3. A network test instrument for network traffic analysis, comprising:
a network monitoring device for monitoring network traffic;
said network monitoring device including a processor implementing:
packet characterizing attribute extraction;
grouping of packets in a time period based on common attribute values; and
storing grouped attributes in a database; and
storing the physical packets.

4. The network test instrument according to claim 3, wherein attribute values are selected from among the following:
identification of the application that the packet is associated with, identification of the flow that the packet is associated with, identification of the transaction that the packet is associated with, packet start time, end time, creation time, time seen, uniform resource indicator id, port information, protocol information, client network address information, server network address information, server id and site id.

5. A method of operating a network test instrument for network traffic analysis, comprising:
monitoring device for monitoring network traffic;
performing packet characterizing attribute extraction on the monitored network traffic;
grouping of packets in a time period based on common extracted characterized attribute values; and
storing grouped attributes in a database; and
storing the physical packets.

6. The method according to claim 5, wherein attribute values are selected from among the following:
identification of the application that the packet is associated with, identification of the flow that the packet is associated with, identification of the transaction that the packet is associated with, packet start time, end time, creation time, time seen, uniform resource indicator id, port information, protocol information, client network address information, server network address information, server id and site id.
